# EUROPEAN PATENT SPECIFICATION

(11) **EP 4 242 190 B1**
(45) Date of publication and mention of the grant of the patent: **26.02.2025**
(21) Application number: 22305286.1
(22) Date of filing: 11.03.2022
(51) Int. Cl.: C04B 28/14, C04B 40/00

(54) **REACTIVE BINDER MIXTURE FOR CEMENTITIOUS ARTICLE**
REAKTIVE BINDEMITTELMISCHUNG FÜR ZEMENTARTIGE GEGENSTÄNDE
MÉLANGE DE LIAISON RÉACTIVE POUR ARTICLE DE CIMENT

(43) Date of publication of application: 13.09.2023
(73) Proprietor: SAINT-GOBAIN PLACO, 92400 Courbevoie (FR)
(72) Inventor: NAIDU, Sonia, 93300 Aubervilliers (FR); NICOLEAU, Luc, 92400 COURBEVOIE (FR)
(74) Representative: Saint-Gobain Recherche

(56) References cited:
- EP-A1- 1 081 113
- CN-A- 113 860 840
- DE-B3- 102009 024 200
- FR-A1- 3 053 040
- US-A1- 2022 017 419
- US-B1- 6 197 107
- KOVLER K: "Setting and Hardening of Gypsum-Portland Cement-Silica Fume Blends, Part 1: Temperature and Setting Expansion", vol. 28, no. 3, 1 January 1998 (1998-01-01), pages 423 - 437, XP009539011, ISSN: 0008-8846, Retrieved from the Internet <URL:https://api.elsevier.com/content/article/PII:S0008884698000052?httpAccept=text/plain> DOI: 10.1016/S0008-8846(98)00005-2
- WANG YINGBIN ET AL: "Effect of silica fume on the thaumasite form of sulfate attack on cement-based materials", WUHAN UNIVERSITY OF TECHNOLOGY. JOURNAL (MATERIAL SCIENCE EDITION), WUHAN LIGONG DAXUE,WUHAN UNIVERSITY OF TECHNOLOGY, CN, vol. 32, no. 5, 7 October 2017 (2017-10-07), pages 1108 - 1114, XP036334028, ISSN: 1000-2413, [retrieved on 20171007], DOI: 10.1007/S11595-017-1718-3

## Description

The invention relates to reactive binder mixtures for manufacturing cementitious articles, in particular cementitious boards.

Conventional processes for producing cementitious articles such as boards on an industrial scale include preparing a cementitious composition, pouring the cementitious composition into appropriate moulds having the desired shape and size, taking the boards out of the moulds once the composition is sufficiently set, and curing the boards. Cementitious boards can also be produced through a continuous process. During such a continuous process, a cementitious composition is prepared in continuous mixers, the composition is continuously spread on a lower sheeting carried by a conveyor to an extruder to be shaped into a ribbon. The ribbon is then carried to a cutting station to be cut into boards of desired dimensions before being cured. The two processes have each very different requirements, for instance in terms of viscosity of the slurry and setting time. In particular, for the continuous process, the composition should set quickly, within a few minutes, during the transit time between the shaping station and the cutting station.

It is known that plaster (calcium sulphate hemihydrate) may be combined with cement to decrease the setting time of cementitious compositions. Also, the carbon dioxide footprint of cementitious articles can be reduced when cement is replaced with calcium sulfate hemihydrate, since plaster requires less energy and produces less CO₂ during its manufacturing. Several attempts have thus been made to provide cementitious compositions suitable for continuous processes. Such compositions are particularly suitable for continuous processes for the manufacturing of cementitious articles such as boards.

Known from CN 113 860 840 A is a roadbed material prepared by using waste mud, in terms of mass percentage, comprising the following preparation raw materials: 1-5% sulfoaluminate cement clinker, 0-2% (pref. 0,8-1,2 wt%) magnesium sulfate as exciting agent, 5-15% PO 52.5 cement, 10-20% desulfurization petroleum coke slag, 10-15% fly ash, 3-6% silica fume and the balance of mud; the mud is waste mud of subway shield tunneling or drilling waste.

Known from EP 1 081 113 A1 is a binder compositions as follows: 28 wt% PC type III, 60 wt % hemihydrate, 10 wt% pozzolan and 2 wt% Ca(OH)2, whereas the pozzolan may be either silica fume, or two different kinds of metakaolin. Boards are made of the wet mixture further including sintered shale as aggregate, water and superplasticizer.

Kovler, K in "Setting and Hardening of Gypsum-Portland Cement-Silica Fume Blends, Part 1: Temperature and Setting Expansion", (CEMENT AND CONCRETE RESEARCH, PERGAMON PRESS, ELMSFORD, NY, US, vol. 28, no. 3, 1 January 1998, pages 423-437, XP009539011) discloses a blend of 20 wt% PC type I, 75 wt% calcium sulfate hemihydrate and 5 wt% silica fume. This composition was found to prevent the formation of ettringite and thaumasite.

DE 10 2009 024200 B3 likewise strives to avoid thaumasite formation by means of a binder free of calcium sulfate, CaO and Ca(OH)2 and comprising: <= 5 wt% OPC, 20-100 wt% slag OR 10-80 wt% fly ash of class C or class F or 10-80 wt% silica dust and an alkaline activator being a carbonate, hydroxide, silicate or silicate hydrate.

Reactions between gypsum, also known as calcium sulphate dihydrate, and hydrated cement can however result, under humid conditions, in the formation of thaumasite crystals, which can deeply affect the stability and durability of the articles. The precipitation of thaumasite often causes swelling of the binder and consumes calcium silicate hydrates. Both result in the articles losing their mechanical performances. In particular, the swelling can be very damaging for boards in wall systems since it leads to internal stresses, cracking and further ingress zones. There is thus a need for such cementitious articles, in particular constructions boards, to be more durable and dimensionally stable when applied in external applications and especially in wet and cold environments.

The use of pozzolanic materials, such as silica fume, is known to mitigate the formation of thaumasite in gypsum-cement composition. The ability of pozzolanic material to stabilise a formulation and prevent the formation of thaumasite is linked to its reactivity. Different well-known factors play a role on the reactivity: (1) the purity, (2) the specific surface area, (3) the agglomeration state and (4) the amorphous content.

The present invention is based on the finding that, an additional component, called a "booster additive" may be added to the binder formulation to improve efficiency of binder compositions comprising pozzolanic material, in particular pozzolanic material having low reactivity.

In this context, the present invention refers to a reactive binder mixture comprising, based on the total dry matter, 10 to 40 wt. % hydraulic cement, 40 to 80 wt. % calcium sulphate hemihydrate, 2 to 35 wt. % pozzolanic material, and 0.1 to 5 wt. % booster additive, wherein the booster additive is selected from soluble alkaline earth salts, strong acids or combinations thereof. A second object of the present invention refers to a cementitious composition comprising the reactive binder mixture of the invention. A third object of the present invention refers to a cementitious article, in particular a cementitious board, obtained from the curing of the cementitious composition of the invention.

The booster additive enables either the use of pozzolanic materials having low reactivity or the use of smaller amounts of highly reactive pozzolanic materials by enhancing the early strength and/or dimensional stability properties of formulations in humid conditions. The use of this booster additive also acts to delay the start of swelling of the article, thus extending the article's lifetime. There is also a cost advantage associated with the use of the booster additive, as less reactive pozzolanic materials are often cheaper and/or more readily available. This allows for greater flexibility in the sourcing and in the choice of pozzolanic materials included in the reactive binder mixture.

The booster additive is selected from alkaline earth salts and strong acids.

Soluble alkaline earth salts as defined as alkaline earth salts soluble in water, e.g. having a solubility in water at 25°C of more than 30 g/100 mL. As an option of the invention, the soluble alkaline earth slats are magnesium salts, preferably selected from magnesium chloride, magnesium nitrate, magnesium sulphate (anhydrous or in any hydrate form such as heptahydrate), or combinations thereof, more preferably from magnesium sulphate.

Strong acids are defined as acids having a pKa in water equal or less than 0. According to an optional characteristic of the invention, the strong acid is selected from chloric acid, hydrobromic acid, hydrochloric acid, hydroiodic acid, perchloric acid, nitric acid, sulfuric acid, and combinations thereof, preferably from hydrochloric acid.

The reactive binder mixture comprises 0.1 to 5 wt.%, preferably 0.3 to 3 wt.%, more preferably 0.5 to 2 wt.% booster additive.

The reactive binder mixture according to the present invention comprises relatively low contents of hydraulic cement compared to calcium sulphate hemihydrate. Despite this relative low cement content, the cementitious article manufactured with this reactive binder mixture have similar, if not improved, water resistance. The water resistance is defined here as the capability to maintain the mechanical properties in wet environment at the same level as in dry conditions. Typically for boards, it can be assessed as set out in EN12467.

The hydraulic cement may be any type of cement: CEM I, II, III, IV or V, as defined in EN 197-1:2000. Preferably, the hydraulic cement is Portland cement (CEM I). Calcium sulphate hemihydrate can refer either to alpha plaster or beta plaster. Alpha plaster has lower specific surface area compared to beta plaster, which results in lower water demand for equivalent workability.

The reactive binder mixture comprises from 10 wt.%, preferably 12 wt.%, more preferably 15 wt.%, or even 17 wt.%, to 40 wt.%, preferably 30 wt.%, more preferably 25 wt.%, or even 20 wt.%, of hydraulic cement.

The addition of calcium sulphate hemihydrate in the reactive binder mixture accelerates the setting time of the cementitious composition obtained from this reactive binder mixture. The use of the reactive binder mixture according to the invention in a cementitious article can thus mitigate or even prevent formation of thaumasite crystals while having a controlled setting time, for example tenths of seconds to tenths of minutes. The cementitious article also exhibits good water resistance. Additionally, cementitious articles manufactured according to the invention can have a reduced carbon footprint due to their composition, and as such can be more sustainable, low-carbon alternatives compared to existing cementitious articles.

The reactive binder composition comprises from 40 wt.%, preferably 45 wt.%, more preferably 50 wt.%, or even 52 wt.%, to 80 wt.%, preferably 75 wt.%, more preferably 70 wt.%, or even 65 wt.%, of calcium sulphate hemihydrate.

The reactive binder composition comprises from 2 wt.%, preferably 5 wt.%, more preferably 7 wt.%, or even 10 wt.%, to 35 wt.%, preferably 33 wt.%, more preferably 30 wt.%, of pozzolanic material. According to another optional characteristic of the invention, the pozzolanic material is selected from silica fumes, fly ash, metakaolin, or mixtures thereof.

The pozzolanic material used in the reactive binder mixture according to the invention can be a pozzolanic material having a reactivity parameter R lower than 55%. The reactivity parameter R is defined by the proportion of calcium hydroxide consumed after 3 days of reaction with the pozzolanic material in water, at 23°C. Calcium hydroxide content is calculated from its associated mass loss between 380 and 500°C measured by thermogravimetric analysis (TGA) at a heating rate of 10°C/min under nitrogen, of a sample made from a mixture of 15 g pozzolanic material, 15.75 g calcium hydroxide (analytical grade), 2.25 g calcium carbonate (analytical grade) and 40.5 g of water. The amount of calcium hydroxide consumed is the difference between its amount immediately after mixing (A) and its amount after being cured in a closed container at 40°C for 3 days (72 hours) (B). The reactivity parameter R is thus (A-B)/A

In some embodiments, the reactive binder mixture comprises at least 15 to 25 wt.% hydraulic cement, 50 to 70 wt.% calcium sulphate hemihydrate, 10 to 35 wt.% pozzolanic material, and 0.1 to 5 wt.% booster additive.

According to other embodiments, the reactive binder mixture comprises 17 to 20 wt.% hydraulic cement, 52 to 65 wt.% calcium sulphate hemihydrate, 15 to 30 wt.% pozzolanic material, and 0.1 to 5 wt.% booster additive.

The content of hydraulic cement, calcium sulphate hemihydrate, pozzolanic material and booster additive generally sums up to at least 80 wt.%, preferably at least 90 wt.%, more preferably at least 95 wt.%, even more preferably at least 99 wt.% of the total reactive binder mixture based on dry matter. In some embodiments, the reactive binder mixture consists essentially of, or consists of, hydraulic cement, calcium sulphate hemihydrate, pozzolanic material and booster additive as described before, i.e., the composition does not comprise further components acting as reactive binder.

The invention also relates to a cementitious composition comprising, based on the total dry matter, 15 to 90 wt%, preferably 20 to 70 wt.%, more preferably 25 to 50 wt/%, of the reactive binder mixture as defined above and 10 to 85 wt.%, preferably 30 to 80 wt.%, more preferably 50 to 75wt.%, of fillers. The cementitious composition can be a dry blend or an aqueous slurry. When the cementitious composition is an aqueous slurry it comprises typically a water-to-binder weight ratio ranging from 0.2 to 1.

Fillers may be selected from aggregates such as sand, limestone or other calcium carbonates, greywacke, basalt, dolomite, volcanic rock, slate, and/or recycled material from the production of the cementitious boards, or mixtures thereof, lightweight fillers such as expanded clays, expanded perlites, expanded shale, polystyrene beads, expanded glass beads, or mixtures thereof, and fibers such as glass fibers, synthetic fibers, natural fibers, and mixtures thereof.

Such fillers are intended to be effectively inert materials. Such effectively inert materials do not tend to significantly affect the setting characteristics of the reactive binder mixture. In particular, fillers do not create any significant chemical reaction with the reactive binder mixture.

Admixtures may also be added to the cementitious composition, for instance to alter or enhance the properties of this reactive binder mixture and/or to improve the workability of the cementitious composition and/or to improve the properties of the cementitious article. There are several types of admixtures, among which are retarders, set and hardening accelerators, plasticisers, foaming agents, bonding agents, shrinkage reducers, anti-foam agents, pigments, hydrophobic agent and corrosion inhibitors.

Retarders are components which can significantly delay the setting time of the reactive binder mixture. Retarders can be chosen from citric acid, tartaric acid, gluconates, phosphates, polyacrylates, polymethylacrylates, sugars and protein-based agents. On the contrary, accelerators can speed up the mechanical properties development of the reactive binder mixture. Accelerators can be chosen from soluble salts such as potassium sulphate or ammonium sulphate, mineral acids, organic acids, chlorides, nitrates, sulphates and bisulphates, or gypsum seeds as nucleating agents.

Plasticisers, or superplasticisers, are used to increase the binder content without affecting the workability, or, to increase the fluidity for a same solid content. Plasticisers or superplasticisers used in the invention may be selected from lignosulphonates or synthetic naphthalene sulphonates, polycarboxylate ethers or phosphonated polyarylethers.

Other admixtures may include foaming agents, which are used to produce air bubbles in the cementitious board. Foaming agents can be made from hydrolysed proteins, synthetic surfactants and alkyl ether sulphonates combined with water and air.

The present invention further relates to a cementitious article, in particular a cementitious board, cementitious prefabricated elements or mortars including flooring products, obtained from the curing of the cementitious composition as defined above. The cementitious article is preferably a cementitious board, comprising a lightweight core between a first covering layer and a second covering layer, wherein the core results from the curing of an aqueous cementitious composition as defined above.

The reactive binder mixture is therefore mixed with fillers to make cementitious boards, which in the present invention refer to construction boards obtained from cementitious compositions. The expression "lightweight core" refers to a core having a weight of 5 kg/m² to 17 kg/m² and/or a specific gravity of 0.4 to 1.36.

The invention also covers a process for manufacturing a cementitious previously described, in particular a cementitious board, comprising a step of mixing hydraulic cement, calcium sulphate hemihydrate, the pozzolanic material and the booster additive to form a reactive binder mixture as previously described, a step wherein an aqueous cementitious composition is formed by adding water to the reactive binder mixture, and a step of forming the cementitious article using the aqueous cementitious composition. The forming step may include casting the aqueous cementitious composition into moulds or continuously pouring and extruding the aqueous cementitious composition.

In some embodiments, the process of the invention is a process for manufacturing a cementitious board as previously described, comprising a step of mixing hydraulic cement, calcium sulphate hemihydrate the pozzolanic material and the booster additive to form a reactive binder mixture as previously described, a step wherein an aqueous cementitious composition is formed by adding fillers and water to the reactive binder mixture, and a step wherein the aqueous cementitious composition is poured onto a conveyor, in which the first covering layer carried by the conveyor is covered with the aqueous cementitious composition.

In some embodiments, the process further comprises a step in which fillers are added to the aqueous cementitious composition.

The process may also comprise a step wherein the first covering layer covered in aqueous cementitious composition is extruded, cut and cured.

The present invention will now be described more fully hereinafter with reference to the accompanying drawings, in which some, but not all embodiments of the invention are shown. Indeed, the invention may be embodied in many different forms and should not be construed as limited to the embodiments set forth herein; on the contrary, these embodiments are provided so that this disclosure will satisfy applicable legal requirements.

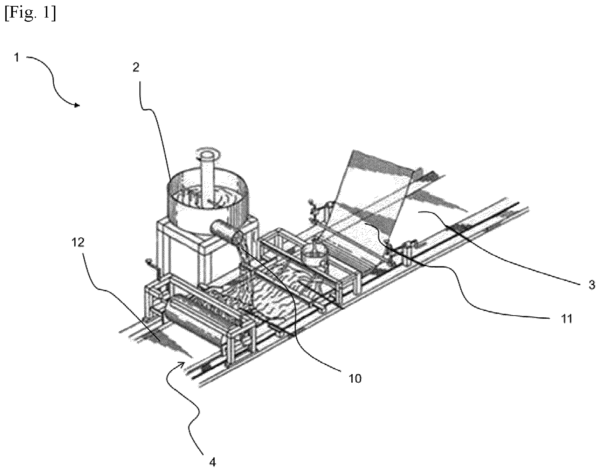

[Fig. 1] is a schematic view of a cementitious board manufacturing process;

Like numbers refer to like elements throughout drawings.

As shown in figure 1, the cementitious board manufacturing process 1 which is used to manufacture cementitious boards 4 according to the invention is a continuous process. Such manufacturing process comprises at least a tank 2, in which components for an aqueous cementitious composition 10 are continuously mixed to form a cementitious slurry. The components of such aqueous cementitious composition 10 will be described hereinafter.

The aqueous cementitious composition 10 is poured on a conveyor 3, this conveyor 3 carrying a first covering layer 11. This first covering layer 11 is thus covered with the aqueous cementitious composition 10, the latter forming a lightweight core of the cementitious boards 4. In some embodiments, the conveyor 3 comprises vibrating components which help spread out the aqueous cementitious composition 10 with its vibrations. The cementitious board 4 may also comprise a second covering layer 12, which is to be placed on top of the aqueous cementitious composition 10. Once the aqueous cementitious composition 10 has been poured on the first covering layer 11, they may go through an extruder and a cutting station, not shown on figure 1, where they are cut into cementitious boards 4 of desired dimensions. The cementitious boards 4 can then be stored for a curing process when necessary.

The components mixed in the tank 2 to form the aqueous cementitious composition 10 are a reactive binder mixture, water, and in some embodiments fillers.

The reactive binder mixture can make up 15 to 90 wt.% of the components of the aqueous cementitious composition while the fillers make up 10 to 85 wt. %. These percentages are based on the solid weight (wt.) ratio between the component and the total dry matter.

The fillers can be chosen from aggregates such as sand or calcium carbonate, lightweight fillers such as expanded clay or hydrophobic expanded perlite, and fibers such as glass fibers, synthetic fibers or natural fibers. These fillers are effectively inert materials, which do not significantly react with the reactive binder mixture. The aqueous cementitious composition may also comprise admixtures, e.g., retarders, accelerators, plasticisers or foaming agents. Such admixtures can be used to alter or enhance the properties of the reactive binder mixture and to improve the quality of the cementitious board 4.

The invention will be illustrated by the following non-limiting example.

Samples were prepared from an aqueous cementitious composition comprising, based on total dry weight, 32 wt.% of a reactive binder (comprising hydraulic cement, calcium sulphate hemihydrate, and pozzolanic material), 68 wt.% of fillers (comprising calcium carbonate and sand), 0.3 wt.% of plasticizer and 0.005 wt.% of retarder. Samples I1 and I2, according to the invention comprise a booster additive consisting respectively of hydrochloric acid and magnesium sulphate, whereas sample C1, which is a comparative example, comprises no booster additive. The cementitious compositions are summarized in table 1.

**[Table 1]**

| **Sample** | | **I1** | **I2** | **C1** |
|---|---|---|---|---|
| **Reactive binder** | | **32.1%** | | **31.9%** |
| | hydraulic cement | 21.6% | | 21.9% |
| | calcium sulphate hemihydrate | 61.9% | | 62.5% |
| | Silica fume | 15.5% | | 15.6% |
| | Booster additive | 1% HCl | 1% MgSO₄ | - |
| **Fillers** | | **67.5%** | | **67.8%** |
| | Calcium carbonate | 26.5% | | |
| | Sand | 73.5% | | |
| **Plasticizer** | | **0.3%** | | |
| **Retarder** | | **0.005%** | | |

The samples were obtained by mixing the components with water, with a water-to-binder weight ratio of approximatively 0.6, and pouring the aqueous compositions thus obtained into moulds that consisted of three cavities measuring 4 x 4 x 16 cm³ each, and then covered with plastic to preserve humidity. The samples, each thus measuring approximately 4 x 4 x 16 cm³, were demoulded after 24 hours and placed unsealed in the lab at room temperature (and approximately 60% RH). After a further 6 days, each board sample was submitted to an immersion test consisting in placing the samples in water at approximately 5°C. The dimensional variations and compressive strengths of samples were monitored before and after immersion. Table 2 shows the variation in compressive strengthsas percentages of sample strength loss over immersion time.

**[Table 2]**

| **Period of immersion (davs)** | **1** | **14** |
|---|---|---|
| **C1 (no booster)** | -48% | -42% |
| **I1 (HCl)** | -28% | -14% |
| **I2 (MgSO⁴)** | -32% | -33% |

Whereas all samples I1, I2 and C1 had similar compressive strengths before immersion, samples I1 and I2 according to the invention showed improved early strength stability than sample C1 comprising no booster additive. In addition, samples I1 and I2 showed similar dimensional stability under humid conditions compared to sample C1.

Any modifications and other embodiments of the invention set forth herein will come to mind to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A reactive binder mixture comprising, based on the total dry matter:
10 to 40 wt.% hydraulic cement,
40 to 80 wt.% calcium sulphate hemihydrate,
2 to 35 wt.% pozzolanic material, and
0.1 to 5 wt.% booster additive,
wherein the booster additive is selected from soluble alkaline earth salts, strong acids and combinations thereof.

2. The reactive binder mixture according to claim 1, wherein the soluble alkaline earth salt is selected from soluble magnesium salts, preferably from magnesium sulphate, magnesium chloride, magnesium carbonate, magnesium nitrate, magnesium phosphate and combinations thereof.

3. The reactive binder mixture according to any one of claim 1 or 2, wherein the strong acid is selected from chloric acid, hydrobromic acid, hydrochloric acid, hydroiodic acid, perchloric acid, nitric acid, sulfuric acid and combinations thereof.

4. The reactive binder mixture according to any one of the precedent claims, wherein the pozzolanic material is selected from silica fumes, fly ash, metakaolin and mixtures thereof.

5. The reactive binder mixture according to any one of the precedent claims, wherein the pozzolanic material has a reactivity parameter R of less than 55%, the reactivity parameter R being defined by the proportion of calcium hydroxide consumed after 3 days of reaction with the pozzolanic material in water, at 23°C.

6. The reactive binder mixture according to any one of claims 1 to 4, comprising, based on the total dry matter:
15 to 25 wt. % hydraulic cement,
50 to 70 wt. % calcium sulphate hemihydrate,
10 to 35 wt. % silica source material, and
0.1 to 5 wt.% booster additive.

7. The reactive binder mixture according to any one of the precedent claims, comprising:
17 to 20 wt. % hydraulic cement,
52 to 65 wt.% calcium sulphate hemihydrate,
15 to 30 wt.% pozzolanic material, and
0.1 to 5 wt.% booster additive.

8. A cementitious article obtained from the curing of a cementitious composition comprising, based on the total dry matter, 15 to 90 wt.% of the reactive binder mixture as defined in any one of claims 1 to 7 and 10 to 85 wt.%, of fillers.

9. The cementitious article according to claim 8, wherein said cementitious article is a cementitious board.

10. The cementitious article according to claim 8 or 9, wherein said cementitious article is a cementitious board (4), comprising a lightweight core between a first covering layer (11) and a second covering layer (12), wherein the core results from the curing of an aqueous cementitious composition (10) comprising, based on the total dry matter, 15 to 90 wt. % of the reactive binder mixture according to any one of claims 1 to 7 and 10 to 85 wt. % of fillers, and has a weight of 5 kg/m² to 17 kg/m² and/or a specific gravity of 0.4 to 1.36.

11. A process for manufacturing a cementitious article as defined in any one of claims 8 to 10, in particular a cementitious board as defined in claim 9 or 10, comprising a step of mixing hydraulic cement, calcium sulphate hemihydrate, the pozzolanic material and the booster additive to form a reactive binder mixture according to any one of claims 1 to 7, a step wherein an aqueous cementitious composition is formed by adding water to the reactive binder mixture, and a step of forming the cementitious article using the aqueous cementitious composition.

12. The process according to claim 11, where the step of forming the cementitious article comprises pouring the aqueous cementitious composition into moulds.

13. The process (1) according to claim 11 for manufacturing a cementitious board (4) as defined in claim 10, comprising a step of mixing hydraulic cement, calcium sulphate hemihydrate, the pozzolanic material and the booster additive to form a reactive binder mixture according to any one of claims 1 to 7, a step wherein an aqueous cementitious composition (10) is formed by adding water to the reactive binder mixture, and a step wherein the aqueous cementitious composition (10) is poured onto a conveyor (3), in which the first covering layer (11) carried by the conveyor (3) is covered with the aqueous cementitious composition (10).

## Patentansprüche

1. Reaktive Bindemittelmischung, umfassend, bezogen auf die Gesamttrockenmasse:
zu 10 bis 40 Gew.-% hydraulischen Zement,
zu 40 bis 80 Gew.-% Calciumsulfathalbhydrat,
zu 2 bis 35 Gew.-% Puzzolanmaterial, und
zu 0,1 bis 5 Gew.-% Booster-Zusatzstoff,
wobei der Booster-Zusatzstoff aus löslichen Erdalkalisalzen, starken Säuren und Kombinationen davon ausgewählt ist.

2. Reaktive Bindemittelmischung nach Anspruch 1, wobei das lösliche Erdalkalisalz aus löslichen Magnesiumsalzen, vorzugsweise aus Magnesiumsulfat, Magnesiumchlorid, Magnesiumcarbonat, Magnesiumnitrat, Magnesiumphosphat und Kombinationen davon ausgewählt ist.

3. Reaktive Bindemittelmischung nach einem der Ansprüche 1 oder 2, wobei die starke Säure aus Chlorsäure, Bromwasserstoffsäure, Salzsäure, lodwasserstoffsäure, Perchlorsäure, Salpetersäure, Schwefelsäure und Kombinationen davon ausgewählt ist.

4. Reaktive Bindemittelmischung nach einem der vorstehenden Ansprüche, wobei das Puzzolanmaterial aus Siliciumdioxiddämpfen, Flugasche, Metakaolin und Mischungen davon ausgewählt ist.

5. Reaktive Bindemittelmischung nach einem der vorstehenden Ansprüche, wobei das Puzzolanmaterial einen Reaktivitätsparameter R von weniger als 55 % aufweist, wobei der Reaktivitätsparameter R durch den Anteil an Calciumhydroxid definiert ist, der nach einer 3-tägigen Reaktion mit dem Puzzolanmaterial in Wasser bei 23 °C verbraucht ist.

6. Reaktive Bindemittelmischung nach einem der Ansprüche 1 bis 4, umfassend, bezogen auf die Gesamttrockenmasse:
zu 15 bis 25 Gew.-% hydraulischen Zement,
zu 50 bis 70 Gew.-% Calciumsulfathalbhydrat,
zu 10 bis 35 Gew.-% Siliciumdioxidausgangsmaterial, und
zu 0,1 bis 5 Gew.% Booster-Zusatzstoff.

7. Reaktive Bindemittelmischung nach einem der vorstehenden Ansprüche, umfassend:
zu 17 bis 20 Gew.-% hydraulischen Zement,
zu 52 bis 65 Gew.-% Calciumsulfathalbhydrat,
zu 15 bis 30 Gew.-% Puzzolanmaterial, und
zu 0,1 bis 5 Gew.% Booster-Zusatzstoff.

8. Zementartiger Gegenstand, der aus dem Aushärten einer zementartigen Zusammensetzung erhalten wird, umfassend, bezogen auf die Gesamttrockenmasse, zu 15 bis 90 Gew.-% die reaktive Bindemittelmischung nach einem der Ansprüche 1 bis 7 und zu 10 bis 85 Gew.-% Füllstoffe.

9. Zementartiger Gegenstand nach Anspruch 8, wobei der zementartige Gegenstand eine zementartige Platte ist.

10. Zementartiger Gegenstand nach Anspruch 8 oder 9, wobei der zementartige Gegenstand eine zementartige Platte (4) ist, umfassend einen leichten Kern zwischen einer ersten Deckschicht (11) und einer zweiten Deckschicht (12), wobei der Kern aus dem Aushärten einer wässrigen zementartigen Zusammensetzung (10) resultiert, umfassend, bezogen auf die Gesamttrockenmasse, zu 15 bis 90 Gew.-% die reaktive Bindemittelmischung nach einem der Ansprüche 1 bis 7 und zu 10 bis 85 Gew.-% Füllstoffe, und ein Gewicht von 5 kg/m² bis 17 kg/m² und/oder eine relative Dichte von 0,4 bis 1,36 aufweist.

11. Verfahren zum Herstellen eines zementartigen Gegenstands nach einem der Ansprüche 8 bis 10, insbesondere einer zementartigen Platte nach Anspruch 9 oder 10, umfassend einen Schritt eines Mischens von hydraulischem Zement, Calciumsulfathalbhydrat, dem Puzzolanmaterial und dem Booster-Zusatzstoff, um eine reaktive Bindemittelmischung nach einem der Ansprüche 1 bis 7 auszubilden, einen Schritt, wobei eine wässrige zementartige Zusammensetzung durch Zugeben von Wasser zu der reaktiven Bindemittelmischung ausgebildet wird, und einen Schritt des Ausbildens des zementartigen Gegenstands unter Verwendung der wässrigen zementartigen Zusammensetzung.

12. Verfahren nach Anspruch 11, wobei der Schritt des Ausbildens des zementartigen Gegenstands ein Gießen der wässrigen zementartigen Zusammensetzung in Formen umfasst.

13. Verfahren (1) nach Anspruch 11 zum Herstellen einer zementartigen Platte (4) nach Anspruch 10, umfassend einen Schritt des Mischens von hydraulischem Zement, Calciumsulfathalbhydrat, dem Puzzolanmaterial und dem Booster-Zusatzstoff, um eine reaktive Bindemittelmischung nach einem der Ansprüche 1 bis 7 auszubilden, einen Schritt, wobei eine wässrige zementartige Zusammensetzung (10) durch Zugeben von Wasser zu der reaktiven Bindemittelmischung ausgebildet wird, und einen Schritt, wobei die wässrige zementartige Zusammensetzung (10) auf ein Förderband (3) gegossen wird, in dem die erste Deckschicht (11), die durch das Förderband (3) getragen wird, mit der wässrigen zementartigen Zusammensetzung (10) bedeckt wird.

## Revendications

1. Mélange de liant réactif comprenant, sur la base de la matière sèche totale :
10 à 40 % en poids de ciment hydraulique,
40 à 80 % en poids de sulfate de calcium hémihydraté,
2 à 35 % en poids de matériau pouzzolanique, et
0,1 à 5 % en poids d'additif de renforcement,
dans lequel l'additif de renforcement est choisi parmi les sels alcalino-terreux solubles, les acides forts et leurs combinaisons.

2. Mélange de liant réactif selon la revendication 1, dans lequel le sel alcalino-terreux soluble est choisi parmi les sels de magnésium solubles, de préférence parmi le sulfate de magnésium, le chlorure de magnésium, le carbonate de magnésium, le nitrate de magnésium, le phosphate de magnésium et leurs combinaisons.

3. Mélange de liant réactif selon l'une quelconque des revendications 1 ou 2, dans lequel l'acide fort est choisi parmi l'acide chlorique, l'acide bromhydrique, l'acide chlorhydrique, l'acide iodhydrique, l'acide perchlorique, l'acide nitrique, l'acide sulfurique et leurs combinaisons.

4. Mélange de liant réactif selon l'une quelconque des revendications précédentes, dans lequel le matériau pouzzolanique est choisi parmi les fumées de silice, les cendres volantes, le métakaolin et leurs mélanges.

5. Mélange de liant réactif selon l'une quelconque des revendications précédentes, dans lequel le matériau pouzzolanique présente un paramètre de réactivité R inférieur à 55 %, le paramètre de réactivité R étant défini par la proportion d'hydroxyde de calcium consommée après 3 jours de réaction avec le matériau pouzzolanique dans l'eau, à 23 °C.

6. Mélange de liant réactif selon l'une quelconque des revendications 1 à 4, comprenant, sur la base de la matière sèche totale :
15 à 25 % en poids de ciment hydraulique,
50 à 70 % en poids de sulfate de calcium hémihydraté,
10 à 35 % en poids de matériau source de silice, et
0,1 à 5 % en poids d'additif de renforcement.

7. Mélange de liant réactif selon l'une quelconque des revendications précédentes, comprenant :
17 à 20 % en poids de ciment hydraulique,
52 à 65 % en poids de sulfate de calcium hémihydraté,
15 à 30 % en poids de matériau pouzzolanique, et
0,1 à 5 % en poids d'additif de renforcement.

8. Article cimentaire obtenu par le durcissement d'une composition cimentaire comprenant, sur la base de la matière sèche totale, 15 à 90 % en poids du mélange de liant réactif tel que défini dans l'une quelconque des revendications 1 à 7 et 10 à 85 % en poids de charges.

9. Article cimentaire selon la revendication 8, dans lequel ledit article cimentaire est un panneau cimentaire.

10. Article cimentaire selon la revendication 8 ou 9, dans lequel ledit article cimentaire est un panneau cimentaire (4), comprenant une partie centrale légère entre une première couche de revêtement (11) et une seconde couche de revêtement (12), dans lequel la partie centrale résulte du durcissement d'une composition cimentaire aqueuse (10) comprenant, sur la base de la matière sèche totale, 15 à 90 % en poids de mélange de liant réactif selon l'une quelconque des revendications 1 à 7 et 10 à 85 % en poids de charges, et présente un poids de 5 kg/m² à 17 kg/m² et/ou une densité de 0,4 à 1,36.

11. Procédé de fabrication d'un article cimentaire tel que défini dans l'une quelconque des revendications 8 à 10, en particulier d'un panneau cimentaire tel que défini dans la revendication 9 ou 10, comprenant une étape consistant à mélanger du ciment hydraulique, du sulfate de calcium hémihydraté, du matériau pouzzolanique et de l'additif de renforcement pour former un mélange de liant réactif selon l'une quelconque des revendications 1 à 7, une étape dans laquelle une composition cimentaire aqueuse est formée en ajoutant de l'eau au mélange de liant réactif, et une étape consistant à former l'article cimentaire à l'aide de la composition cimentaire aqueuse.

12. Procédé selon la revendication 11, où l'étape consistant à former l'article cimentaire comprend le versement de la composition cimentaire aqueuse dans des moules.

13. Procédé (1) selon la revendication 11 de fabrication d'un panneau cimentaire (4) tel que défini dans la revendication 10, comprenant une étape consistant à mélanger du ciment hydraulique, du sulfate de calcium hémihydraté, du matériau pouzzolanique et de l'additif de renforcement pour former un mélange de liant réactif selon l'une quelconque des revendications 1 à 7, une étape dans laquelle une composition cimentaire aqueuse (10) est formée en ajoutant de l'eau au mélange de liant réactif, et une étape dans laquelle la composition cimentaire aqueuse (10) est versée sur un convoyeur (3), dans lequel la première couche de revêtement (11) portée par le convoyeur (3) est revêtue de la composition cimentaire aqueuse (10).
